Europäisches Patentamt

**European Patent Office**

Office européen des brevets

(11) Veröffentlichungsnummer: **0 065 185**
. **B1**

(12) **EUROPÄISCHE PATENTSCHRIFT**

(45) Veröffentlichungstag der Patentschrift:
**27.02.85**

(51) Int. Cl.⁴: **G 21 C 19/10, G 21 C 7/10**

(21) Anmeldenummer: **82103823.9**

(22) Anmeldetag: **04.05.82**

(54) **Kupplung für Kernreaktor-Absorberstäbe.**

(30) Priorität: **14.05.81 DE 3119297**

(43) Veröffentlichungstag der Anmeldung:
**24.11.82 Patentblatt 82/47**

(45) Bekanntmachung des Hinweises auf die Patenterteilung:
**27.02.85 Patentblatt 85/9**

(84) Benannte Vertragsstaaten:
**DE FR GB**

(56) Entgegenhaltungen:
**DE - A - 2 317 014**
**DE - A - 2 359 163**
**DE - A - 2 436 507**
**DE - B - 1 226 224**

(73) Patentinhaber: **INTERATOM Internationale Atomreaktorbau GmbH, Friedrich-Ebert-Strasse, D-5060 Bergisch Gladbach 1 (DE)**

(72) Erfinder: **Kerz, Klaus, Dipl.-Ing., Bornschlade 56, D-5204 Lohmar 21 (DE)**

(74) Vertreter: **Mehl, Ernst, Dipl.-Ing. et al, Postfach 22 01 76, D-8000 München 22 (DE)**

## Beschreibung

Die vorliegende Erfindung betrifft eine Kupplung nach dem Oberbegriff des ersten Anspruchs. Abschaltvorrichtungen konventioneller Kernreaktoren bestehen üblicherweise aus einer Vielzahl von Absorberstäben, die einzeln oder zu mehreren gemeinsam an lösbaren Kupplungen hängen. Im Normalbetrieb werden die Absorberstäbe an ihrer Kupplung hängend beispielsweise vermittels eines Spindeltriebes mehr oder weniger tief in den Reaktorkern eingefahren. Ist eine Schnellabschaltung des Reaktors erforderlich, so werden die Kupplungen gelöst und die Absorberstäbe fallen, durch die Schwerkraft beschleunigt, in den Reaktorkern hinein. Als Kupplungen für die Halterung des Absorberstabes sind Klauenkupplungen vorgeschlagen worden, die in eine Hinterdrehung des sogenannten Greifkopfes des Absorberstabes eingreifen. Die Betätigung der Kupplung kann durch das Abfallen des Ankers von einem im Abschaltfall stromlos werdenden Elektromagneten bewirkt werden. Eine Abschaltvorrichtung der beschriebenen Art ist aus der DE-A Nr. 2040428 bekannt.

Bei den bekannten Vorrichtungen wird jede Absorberstabkupplung nur durch einen Mechanismus ausgelöst. Beim Ausfall desselben infolge einer Störung steht der daran hängende Absorberstab für die Abschaltung des Reaktors nicht mehr zur Verfügung, was dazu zwingt, eine über den Mindestbedarf hinausgehende, d.h. redundante Anzahl derselben vorzusehen, so dass auch bei Fehlfunktion einer Anzahl von Kupplungen die Abschaltung des Reaktors sicher erreicht wird. Dies bedeutet einen sehr hohen zusätzlichen Aufwand.

Aufgabe der vorliegenden Erfindung ist eine Kupplung für Kernreaktor-Absorberstäbe, die selbst durch mehrere redundante Mechanismen zur Auslösung gebracht werden kann.

Die Lösung der Aufgabe erfolgt durch die im kennzeichnenden Teil des ersten Anspruchs angegebenen Mittel. Die Kupplung wird ausgelöst, wenn nur eines der Betätigungselemente vorschriftsmässig funktioniert, wobei davon ausgegangen wird, dass bei Auslösung der Schnellabschaltung jedes Betätigungselement unabhängig voneinander in Funktion gesetzt wird.

Die im zweiten Anspruch vorgeschlagene Ausgestaltung der Erfindung soll sicherstellen, dass nicht mehrere baugleiche Betätigungselemente aufgrund eines ihnen allen gemeinsamen Fehlers gleichzeitig versagen.

Die in den folgenden Ansprüchen vorgeschlagene besondere Ausgestaltung der Erfindung ist zum Zusammenwirken mit Kernreaktor-Absorberstäben herkömmlicher Bauart geeignet, die an ihrem oberen Ende einen pilzförmigen Greifkopf aufweisen, der von aussen durch Klauen umfasst werden kann oder die an ihrem äusseren Rand mit einem nach innen gerichteten, umlaufenden Vorsprung versehen sind, in die von innen nach aussen ausschwenkbare Klauen eingreifen können. Die im dritten Anspruch vorgeschlagene Verriegelung bewirkt, dass sich die Kupplungsklauen bei einer bestimmten Stellung zueinander gegenseitig in der Halteposition festhalten, die Kupplung jedoch gelöst wird, sobald nur eine der Klauen ihre Lage verändert.

Der vierte, fünfte und sechste Anspruch bezeichnen je eine Ausführungsmöglichkeit der Kupplungsklauen. Die erfindungsgemässe Kupplung kann mit Klauen nur einer der beschriebenen Arten ausgestattet sein, es können aber auch alle drei Arten, wie weiter unten beschrieben, in einer einzigen Kupplung Verwendung finden.

Ein Ausführungsbeispiel der Erfindung ist in der Zeichnung dargestellt, und zwar zeigt

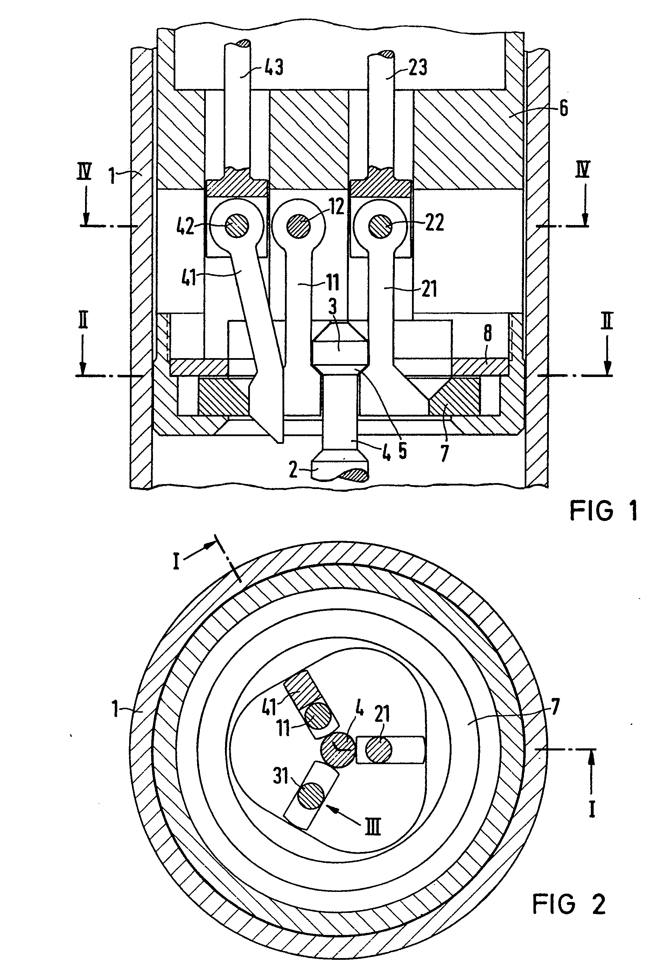

Fig. 1 die Kupplung im geschlossenen Zustand in einem Längsaxialschnitt entsprechend der Linie I-I der Fig. 2,

Fig. 2 einen Querschnitt entsprechend der Linie II-II der Fig. 1,

Fig. 3 die Seitenansicht eines Einzelteils aus der Richtung III der Fig. 2,

Fig. 4 einen Querschnitt entsprechend der Linie IV-IV der Fig. 1,

Fig. 5 einen ersten geöffneten Zustand der Kupplung nach Fig. 1 entsprechend der Linie V-V der Fig. 6,

Fig. 6 einen Querschnitt entsprechend der Linie VI-VI der Fig. 5,

Fig. 7 einen zweiten geöffneten Zustand der Kupplung nach Fig. 1 entsprechend der Linie VII-VII der Fig. 8,

Fig. 8 einen Querschnitt entsprechend der Linie VIII-VIII der Fig. 7,

Fig. 9 einen dritten geöffneten Zustand der Kupplung nach der Fig. 1 entsprechend der Linie IX-IX der Fig. 10,

Fig. 10 einen Querschnitt entsprechend der Line X-X der Fig. 9,

Fig. 11 einen Längsaxialschnitt durch eine zur Fig. 1 alternative Ausführungsform der Kupplung im geschlossenen Zustand entsprechend der Linie XI-XI der Fig. 12, und

Fig. 12 einen Querschnitt entsprechend der Linie XII-XII der Fig. 11.

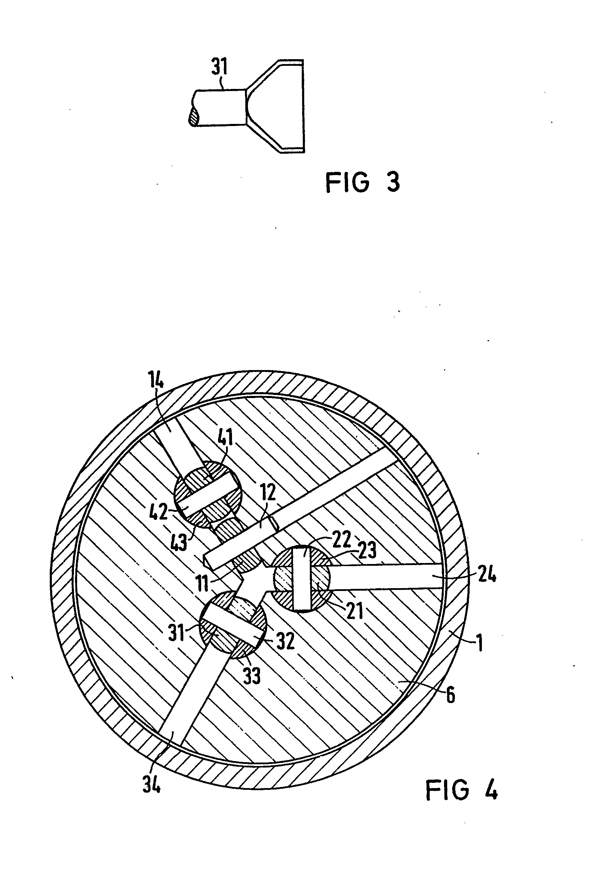

Die Zeichnung zeigt einen in einem Führungsrohr 1 hängend angeordneten Absorberstab 2, der unter dem Einfluss der Schwerkraft, ggf. mit Hilfe hier nicht dargestellter Federn, in den hier ebenfalls nicht dargestellten Kernverband eines Reaktors beschleunigt werden kann, um diesen abzuschalten. Der Absorberstab 2 ist mit einem Greifkopf 3 versehen, der am Übergang zu einer Hinterdrehung 4 gegen die Horizontale geneigte Flächen 5 aufweist. Mit diesen Flächen 5 stützt sich der Greifkopf 3 auf einer ersten Klaue 11, einer zweiten Klaue 21 und einer dritten Klaue 31 ab. Die Klauen sind teils einseitig (erste Klaue 11), teils zweiseitig (zweite Klaue 21 und dritte Klaue 31 – vgl. Fig. 3) mit Vorsprüngen versehen. Die erste Klaue 11 ist um eine an einem Kupplungsgehäuse 6 fest angebrachte erste Drehachse 12 schwenkbar. Die zweite Klaue 21 ist um eine zweite Drehachse 22 schwenkbar und zugleich in axialer Richtung durch ein Gestänge 23 abwärts zu verschieben. Die dritte Klaue 31 ist um eine dritte Drehachse 32 schwenkbar und zugleich mittels eines weiteren Gestänges 33 um eine parallel zur Längsachse der Vorrichtung gelegene Achse drehbar. Ferner ist ein Sperrglied 41 vorhanden, das um eine vierte Drehachse 42 schwenkbar ist und vermittels eines weiteren Gestänges 43 in Längsrichtung nach oben verschoben werden kann. Die Klauen 11, 21, 31 und das Sperrglied 41 werden von einer Verriegelung in Form eines Ringes 7 umfasst, der in einem Raum quer zur Längsachse der Vorrichtung frei beweglich ist, der durch den Boden des Gehäuses 6 und einen mit diesem fest verbundenen, ebenfalls ringförmigen Anschlag 8 gebildet wird. Das seitliche Ausschwenken der Klauen 11, 21, 31 und des Sperrgliedes 41 wird durch im Gehäuse 6 angebrachte radiale Schlitze 14, 24, 34 (vgl. Fig. 4) ermöglicht. Die Bewegung der Gestänge 23, 33, 43 kann durch beliebige, hier nicht dargestellte Mechanismen bewirkt werden; empfehlenswert erscheint eine Anwendung der in zahlreichen Ausführungsformen bekannten Abschaltvorrichtungen für Kernreaktoren, die auf dem Abfallen eines Ankers (unter Umständen mit Federunterstützung) von einem durch den Abschaltbefehl stromlos gewordenen Elektromagneten beruhen.

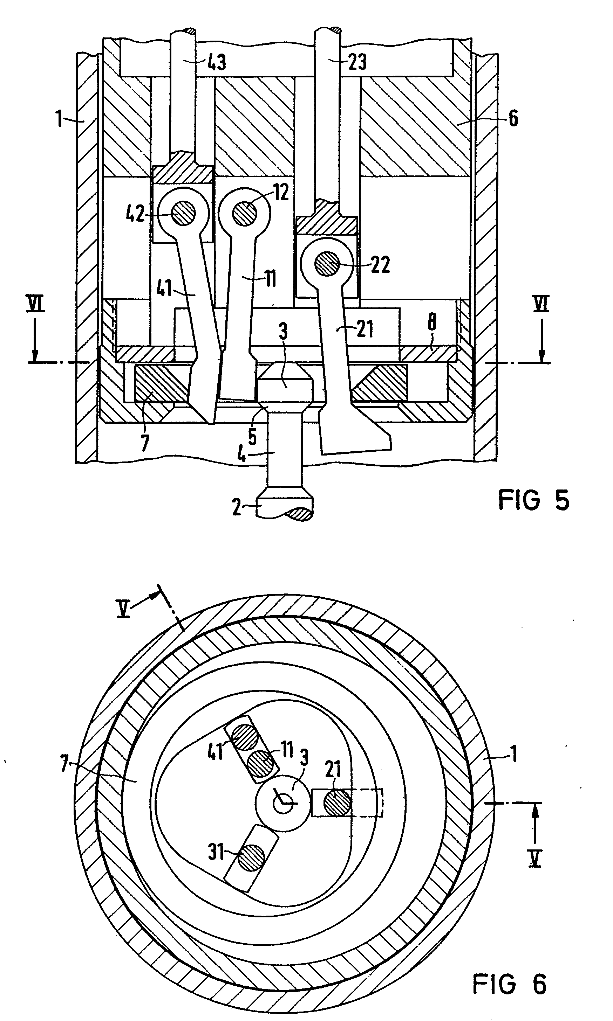

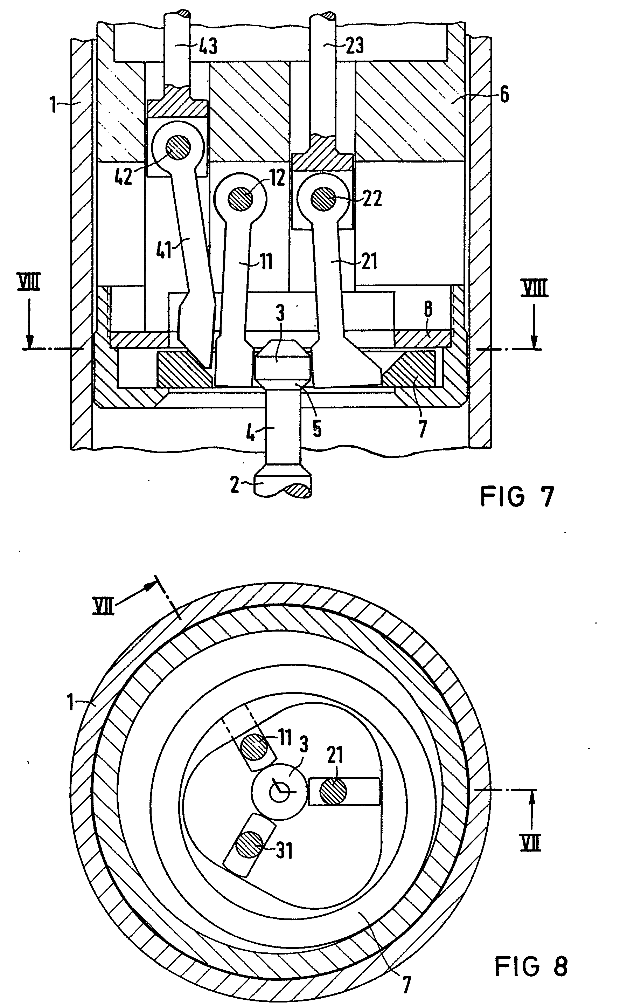

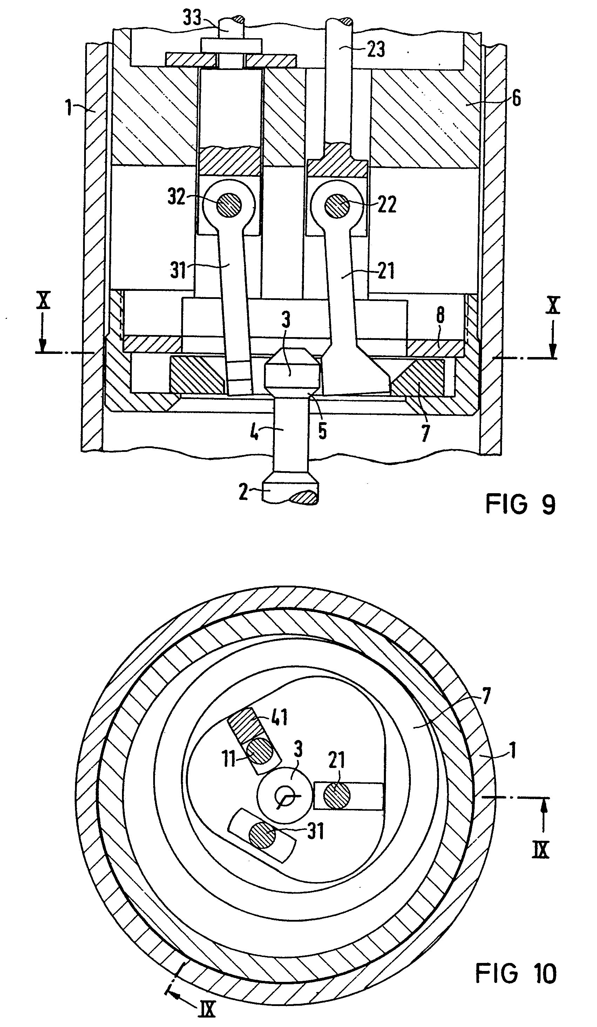

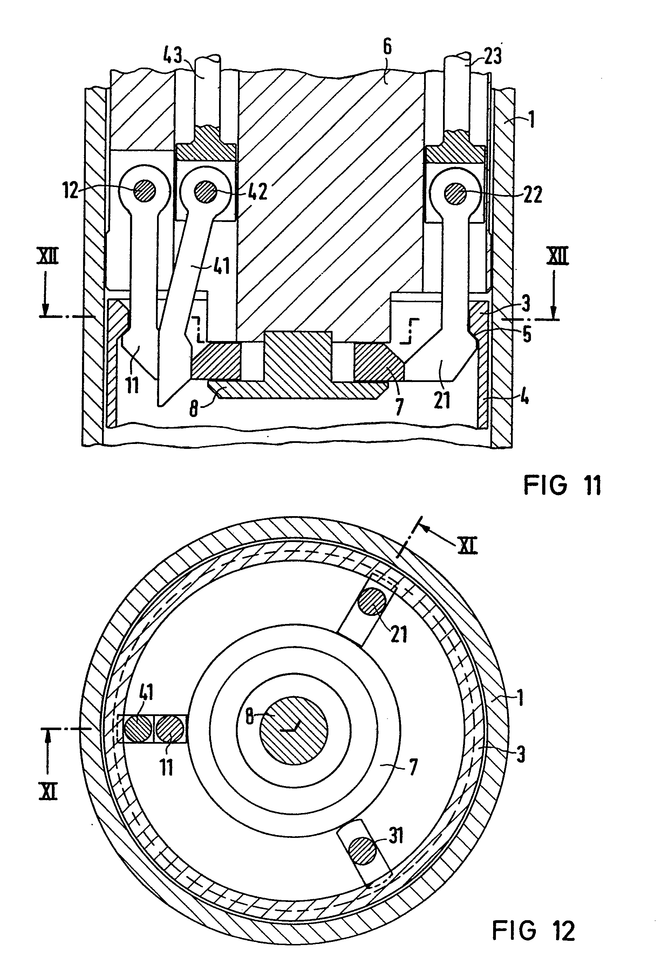

Auf diese Art kann z.B. entsprechend der in den Fig. 5 und 6 dargestellten Lage die zweite Klaue 21 mittels ihres Gestänges 23 nach unten verschoben worden sein. Unter dem Einfluss der Schwerkraft hat der Absorberstab 2 über die geneigte Fläche 5 eine seitwärts wirkende Kraft in die erste Klaue 11 eingebracht. Diese weicht mitsamt dem anliegenden Sperrglied 41 so weit aus, dass der Greifkopf 3 von der ersten Klaue 11 (und hier nicht dargestellt, in ähnlicher Weise auch von der dritten Klaue 31) abfällt. Ermöglicht wird dies dadurch, dass der Ring 7 sich, dieser Kraft nachgebend, ebenfalls weiter (in der Zeichnung nach links) bewegen kann, da ihm die zweite Klaue 21 in ihrer neuen Stellung dazu die Freiheit lässt. Eine alternative Form der Auslösung der Kupplung ist in den Fig. 7 und 8 dargestellt. Hier ist das Sperrglied 41 vermittels seines Gestänges 43 nach oben gezogen worden, so dass der bisher von ersterem innerhalb des Ringes 7 beanspruchte Platz frei geworden ist. Das Gewicht des Absorberstabes 2 sorgt auch hier dafür, dass die Klauen seitwärts unter Verschiebung des Ringes 7 (hier nach rechts in der Zeichnung) so weit beiseite gedrängt werden, dass der Greifkopf 3 von den Klauen abrutschen kann. Eine abermals andere Auslösungsmöglichkeit der Kupplung ist in den Fig. 9 und 10 dargestellt, wo die dritte Klaue 31 vermittels ihres Gestänges 33 um die eigene Längsachse gedreht worden ist. Auch hierdurch wird dem Ring 7 eine seitliche Verschiebung ermöglicht, die ein Ausweichen der ersten Klaue 11, des Sperrgliedes 41 und der zweiten Klaue 21 zulässt. Im Vorhergehenden ist davon ausgegangen worden, dass jede der Klauen 11, 21, 31 durch eine unterschiedliche Art der Betätigung ausgelöst wird. Die erfindungsgemässe Kupplung kann jedoch auch so gestaltet sein, dass sämtliche Klauen in nur einer der beschriebenen Konstruktionen ausgeführt sind und durch zwar unabhängige, aber gleichgerichtete Bewegungen der Betätigungselemente ausgelöst werden.

Die Fig. 11 und 12 schliesslich zeigen eine alternative Konstruktion für solche Absorberstäbe, die statt eines pilzförmigen Greifkopfes 3 eine um den Rand eines Hohlzylinders laufende Haltekante aufweisen. Da die Funktion der Teile gegenüber denjenigen in den vorhergehenden Figuren dargestellten unverändert sind, sind sie auch mit den gleichen Bezugszeichen versehen. Die Auslösung der Kupplung kann vermittels der gleichen Bewegungen der Klauen 11, 21, 31 bzw. des Sperrgliedes 41 erfolgen, auch wenn jetzt der Ring 7 auf der Innenseite dieser Elemente angeordnet ist.

## Patentansprüche

1. Kupplung (11, 21, 31) für während des Betriebes hängend gehalterte Absorberstäbe (2) in Kernreaktoren, gekennzeichnet durch folgende Merkmale:

a) die Kupplung (11, 21, 31) weist mehrere Betätigungselemente (23, 33, 43) auf, die je für sich und gemeinsam die Kupplung auszulösen imstande sind;

b) die zur Auslösung der Kupplung (11, 21, 31) führende Bewegung ist für jedes Betätigungselement (23, 33, 43) unabhängig steuerbar.

2. Kupplung nach Anspruch 1, gekennzeichnet durch folgendes Merkmal: Die zur Auslösung der Kupplung (11, 21, 31) führende Bewegung ist für jedes Betätigungselement (23, 33, 43) unterschiedlicher Art.

3. Kupplung nach Anspruch 1 für Absorberstäbe (2), die mit einem eine Hinterschneidung (4) aufweisenden Greifkopf (3) versehen sind, gekennzeichnet durch folgendes Merkmal: Es ist eine in der Ebene der Hinterschneidung (4) quer zur Längsachse der Vorrichtung verschiebbare Verriegelung (7) vorhanden, die die Kupplungsklauen (11, 21, 31) in ihrer gemeinsamen, in die Hinterschneidung eingreifenden Lage festhält.

4. Vorrichtung nach Anspruch 3, gekennzeichnet durch folgendes Merkmal: Eine oder mehrere der Kupplungsklauen (21) sind aus der Hinterschneidung (4) des Absorberstabkopfes (3) ausschwenkbar und nach unten verschiebbar.

5. Vorrichtung nach Anspruch 3, gekennzeichnet durch folgendes Merkmal: Eine oder mehrere der Kupplungsklauen (31) sind aus der Hinterschneidung (4) des Absorberstabkopfes (3) ausschwenkbar und um ihre Achse drehbar.

6. Vorrichtung nach Anspruch 3, gekennzeichnet durch folgende Merkmale:

a) eine oder mehrere der Kupplungsklauen (11) sind aus der Hinterschneidung (4) des Absorberstabkopfes (3) ausschwenkbar und axial unbeweglich;

b) zwischen Klaue (11) und Verriegelung (7) greift ein axial verschiebliches Sperrglied (41) ein.

## Revendications

1. Dispositif d'accouplement (11, 21, 31) pour des barres d'absorbeurs (2) maintenues suspendues pendant le fonctionnement dans des réacteurs nucléaires, remarquable par les caractéristiques suivantes:

a) le dispositif d'accouplement (11, 21, 31) présente plusieurs éléments de commande (23, 33, 43) qui sont en mesure, chacun pour soi et en commun, de désaccoupler le dispositif d'accouplement;

b) le mouvement provoquant le désaccouplement du dispositif d'accouplement (21, 31) peut être commandé indépendamment pour chaque élément de commande (23, 33, 43).

2. Dispositif d'accouplement suivant la revendication 1, remarquable par la caractéristique suivante: le mouvement provoquant le désaccouplement du dispositif d'accouplement (11, 21, 31) est d'un type différent pour chaque élément de commande (23, 33, 43).

3. Dispositif d'accouplement suivant la revendication 1 pour des barres d'absorbeurs (2) qui sont munies d'une tête de préhension (3) présentant une partie détalonnée (4), remarquable par la caractéristique suivante: il est prévu un verrouillage (7) qui peut coulisser transversalement à l'axe longitudinal du dispositif dans le plan de la partie détalonnée (4) et qui maintient les griffes (11, 21, 31) du dispositif d'accouplement dans leur position commune pénétrant dans la partie détalonnée.

4. Dispositif suivant la revendication 3, remarquable par la caractéristique suivante: une ou plusieurs griffes (21) d'accouplement peuvent basculer hors de la partie détalonnée (4) de la tête (3) de la barre d'absorbeur et peuvent coulisser vers le bas.

5. Dispositif suivant la revendication 3, remarquable par la caractéristique suivante: une ou plusieurs des griffes (31) d'accouplement peuvent basculer hors de la partie détalonnée (4) de la tête (3) de la barre d'absorbeur et peuvent tourner autour de leur axe.

6. Dispositif suivant la revendication 3, remarquable par les caractéristiques suivantes:

a) une ou plusieurs des griffes (11) d'accouplement peuvent basculer hors de la partie détalonnée (4) de la tête (3) de la paroi de la barre d'absorbeur et ne peuvent pas être déplacées axialement;

b) un organe de blocage (41) pouvant coulisser axialement pénètre entre la griffe (11) et le verrouillage (7).

## Claims

1. Coupling device (11, 21, 31) for control rods (2) in nuclear reactors, which are held suspending during operation, characterised by the following features:

a) the coupling device (11, 21, 31) has a plurality of actuating elements (23, 33, 43) which independently or jointly are capable of releasing the coupling device;

b) the movement which leads to the release of the coupling device (11, 21, 31) can be controlled independently for each actuating element (23, 33, 43).

2. A coupling device as claimed in Claim 1, characterised by the following feature: the movement which leads to the release of the coupling device (11, 21, 31) is of a different type for each actuating element (23, 33, 43).

3. A coupling device as claimed in Claim 1 for control rods (2) which are provided with a gripping head (3) which has a cut-away portion (4), characterised by the following feature: a lock (7) is provided which can be displaced in the plane of the cut-away portion (4) transversely to the longitudinal axis of the device and which holds the coupling claws (11, 21, 31) in their common position which engages into the cut-away portion.

4. A device as claimed in Claim 3, characterised by the following feature: one or more of the coupling claws (21) can be pivotted out of the cut-away portion (4) of the control rod head (3) and moved downwards.

5. A device as claimed in Claim 3, characterised by the following feature: one or more of the coupling claws (31) can be pivotted out of the cut-away portion (4) of the control rod head (3) and rotated about its axis.

6. A device as claimed in Claim 3, characterised by the following features:

a) one or more of the coupling claws (11) can be pivotted out of the cut-away portion (4) of the control rod head (3) and is or are axially immobile;

b) an axially displaceable blocking element (41) engages between the claw (11) and the lock (7).

0 065 185

FIG 1

FIG 2

5

31

**FIG 3**

14 41 12 22 23 24 42 43 11 21 1 31 32 6 33 34

**FIG 4**

FIG 5

FIG 6

9

FIG 7

FIG 8

0 065 185

FIG 9

FIG 10

13

FIG 11

FIG 12